Europäisches Patentamt

European Patent Office

Office européen des brevets

(11) Publication number: **0 518 444 A1**

## EUROPEAN PATENT APPLICATION

(21) Application number: **92201721.5**

(22) Date of filing: **11.06.92**

(51) Int. Cl.5: **C08L 53/02**, C08G 81/02, B29C 59/10

(30) Priority: **14.06.91 GB 9112896**

(43) Date of publication of application:
**16.12.92 Bulletin 92/51**

(84) Designated Contracting States:
**BE DE ES FR GB GR IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Fornaro, Alberto**
**Avenue Jean Monnet, 1**
**B-1348 Ottignies Louvain-la-Neuve(BE)**

(54) Process for the manufacture of electron beam irradiated polymeric footwear compositions.

(57) Process for the manufacture of electron beam irradiated rubber footwear compositions by electron beam irradiation with an energy intensity of from 1.0 to 4.5 MeV and at doses in the range of from 50 to 400 kGy of a composition comprising:

(a) a linear block copolymer, containing at least one block of predominantly poly(vinyl aromatic compound) and at least one block of predominantly poly(conjugated diene) in an amount of from 30 to 60% by weight;

(b) a thermoplastic polymer which is compatible with the block copolymer as defined hereinbefore in an amount of from 10 to 50% by weight;

(c) a non-aromatic oil in an amount of from 20 to 40% by weight;

and shaped footwear elements and in particular soles for indoor sport shoes, containing this irradiated compositions.

EP 0 518 444 A1

This invention relates to a process for the manufacture of electron beam irradiated polymeric footwear compositions, comprising a thermoplastic elastomer and in particular a block copolymer, containing at least one block of predominantly poly(vinyl aromatic compound) and at least one block of predominantly poly-(conjugated diene) and more especially a block copolymer containing at least one block of poly(styrene) and at least one block of co(polymer) derived from butadiene, isoprene or mixtures thereof.

With the term "predominantly" it is intended to express that the specified blocks may be derived from one or more vinyl aromatic compounds or conjugated dienes which have optionally been mixed with minor amounts of the other type monomer, such as a block composed of a major amount of conjugated diene and a minor amount of vinyl aromatic compound or vice versa.

High energy irradiation of compositions, comprising block copolymers derived from predominantly one or more vinyl aromatic compounds and predominantly one or more conjugated dienes, was known, for example, from Japanese patent application No. 59059761 and US patents Nos. 4,133,731, 4,152,231, 4,151,057, 4,311,759, 4,432,848 and 4,556,464, disclosing in general adhesive formulations, containing thermoplastic elastomer(s) of the types SB, SBS, SI, SIS and corresponding hydrogenated products, radial SI, radial polyisoprenes and other more sophisticated types, wherein S means a polystyrene block, B a polybutadiene block and I a polyisoprene block, at least a tackifying resin and optionally an acrylate ester and/or a photo initiator.

After exposure to high energy irradiation such as ultraviolet, beta or gamma irradiation, an adhesive composition was obtained, which provided resistance to organic solvents and showed good performances at elevated temperatures.

Irradiation was also known to be applied for the manufacture of impact resistant thermoplastic polymer mixtures, comprising a non-elastic thermoplastic polymer, such as polystyrene, and a block copolymer derived from at least one vinyl aromatic compound and at least one conjugated diene (SB, SI, SBS, SIS) or hydrogenation products thereof optionally mixed with an elastomeric random copolymer derived from said commonness and optionally a peroxide. Said manufacturing processes were known from e.g. European patent No. 0146172 and US patent No. 4,076,768.

It was also known from US patent No. 3,113,912 to manufacture a colourless vulcanisate showing a high strength, by high energy irradiation of compositions, which are substantially free from colouring additives and which are comprising a block copolymer, having a centre block formed from a conjugated diene selected from the group consisting of 1,3-butadiene, 2-methyl-1,3-butadiene and 1,3-pentadiene and terminal blocks formed from a monomer selected from the group consisting of 1,3-butadiene, 2-methyl-1,3-butadiene, 1,3-pentadiene, vinyl-substituted aromatic hydrocarbons, vinyl pyridines, vinyl halides, vinylidene halides and acrylonitrile, the monomer forming the centre block being different from the monomer forming the terminal blocks.

Said block copolymer was subjected to high energy, ionizing irradiation having a potential being at least equivalent to X-ray for a total dosage of from $2 \times 10^6$ to $5 \times 10^7$ rep. units.

It will be appreciated that such high energy irradiated compositions were found to show no combination of improved abrasion resistance and crack growth resistance during flexing ("Rossflex" performance) in a degree aimed at for rubber footwear, which is the object of the present invention, or even a deterioration of these both properties aimed at was found.

From US patent No. 4,716,183 compounds of SBS, SIS or SEBS block copolymers and high quantities of an extender oil (up to 70%) and an acrylate as coupling agent, are irradiated to obtain cross-linking and a better shape retention at high temperature. This was indicated to make said compositions suitable as sealing material.

From Japanese patent application No. 56024145 the preparation of a moulded product was known, which product comprised rubber containing styrene units, such as a thermoplastic block or graft styrene/butadiene, styrene/isoprene, styrene/ethylene/propylene and dimethylsiloxane/styrene copolymers, optionally blended with other rubber, such as natural rubber, isoprene rubber, butadiene rubber and ethylene/propylene rubber.

The moulded product was permeated with a halogenated hydrocarbon, such as methyl-, ethyl-, propyl-, isopropyl-, methylene- and ethylene-chlorides, -bromides, chloroform, bromoform, tetrachloromethane, tetrabromomethane, tetrachloroethane, tetrabromoethane, hexachloroethane, trimethylene bromide, dichloroethylene and trichloroethylene, in the gaseous form at 5-80 °C for 2 s to 60 min or in the liquid form for 1 s to 10 min, optionally in the presence of a photosensitizer, such as beta-naphthalene, sulphonyl chloride, triethanol amine, azobisisobutyronitrile, trichlorobromomethane-4,4'-bis(dimethylamino)-benzo-phenone, benzoin-methyl ether, -ethyl ether and -isopropyl ether and cyclohexyl ether in a concentration of 0.001-0.1 mol% per mol of the halogenated hydrocarbon.

The moulded product was subsequently irradiated with ultraviolet light, improving the oil resistance of the composition.

Moreover, US patent No. 4,447,488 disclosed a sheet of a synthetic resin or natural rubber provided with fillers and additives other than vulcanization accelerators, comprising a sheet of said synthetic resin or natural rubber, containing 3 to 95% by weight of at least one polymeric component which is weldable by heat and/or solvents or swelling agents, and which is cross-linkable by high-energy radiation, said polymeric component being provided in a homogeneous distribution within the sheet and being cross-linked at least partially, over a selected portion of the thickness of said sheet that has been subjected to high energy radiation and extending into the interior of said sheet, said polymeric component in said selected portion being sufficiently cross-linked to provide greater weather resistance and tear strength to said portion and to lose its weldability and the polymeric component in that portion of the sheet including another exposed side surface, which had not been cross-linked by means of high energy radiation, remaining weldable by heat and/or solvents or swelling agents to provide weldability to said another exposed side surface of said sheet.

Said patent also disclosed shaped articles wherein a structure was formed as a sheet resistant to the effects of water and weathering, and a process for the manufacture of sheet material having weather resistance from a polymeric material. Examples provided were relating to e.g. waterproof membranes made from EPDM or chlorosulphonated polyethylene and other polymer combinations derived from natural rubber, styrene-butadiene elastomer, polybutadiene elastomer, polyisoprene elastomer and styrene-butadiene-elastomer block copolymer, styrene-isopreneelastomer block copolymer and the like were mentioned.

Manufacture of said sheets cross-linked only over a part of their thickness from one side of the surface was carried out in the examples, applying an electron radiation device using acceleration voltage of from 400 to 900 keV, a beam amperage of from 25 to 100 mA and a surface dose of from 10 to 16 Mrad and a transport velocity of the sheet of from 3.5 to 5 m/min.

It will be appreciated that from these hereinbefore described publications a person skilled in the art could not derive any teachings in order to reach improved abrasion resistance and crack growth resistance during flexing (a test known in the art as "Rossflex" performance, this term will be used throughout the present description for identification of this characteristic) in footwear and in particular in indoor sporting shoes, based on block copolymers derived from vinyl aromatic compound and conjugated diene and without any coupling agent or sensitizer.

On the other hand there was still a growing need for high quality footwear and in particular sport shoes, which show a combination of improved abrasion resistance and/or "Rossflex" performance, and especially at elevated temperatures, in order to meet the requirements put on indoor sport shoes and more in particular squash shoes, which have been manufactured from attractively priced starting materials.

Although block copolymers derived from a vinyl aromatic compound and a conjugated diene have been used in many footwear applications for many years due to their compounding flexibility, their application has remained unsuccessful in some domains so far.

In particular for indoor sport shoe soling, these thermoplastic rubbers have appeared not to be suitable materials, because the heat generated by friction partially melted the compound. Even if the wear was not disastrous, the shoes left unacceptable marks on the floor.

From e.g. US patent No. 4,313,867 it was known that persons skilled in the art in charge of the improvement of in particular the combination of abrasion resistance and Rossflex performance of foot wear compositions, had directed their efforts to alternative compositions containing much more expensive ingredients.

Accordingly, the main object of the present invention was to provide elastomer compositions to be applied in footwear and showing such sufficiently improved abrasion resistance and Rossflex performance in combination with an attractive price of the starting polymers and without significant deterioration of other properties, and a process for manufacturing footwear from said compositions, as will be clear from e.g. Int. Rubber Conf., Moscow, 3-8 September 1984, pages 7 and 8 and last page in particular.

As a result of extensive research and experimentation a process was surprisingly found providing elastomer containing compositions showing the combination of properties aimed at.

Accordingly, a process for the manufacture of high quality polymeric footwear compositions is provided, characterized by electron beam irradiation of a composition comprising:

(a) a linear block copolymer, containing at least one block of predominantly poly(vinyl aromatic compound) and at least one block of predominantly poly(conjugated diene) and more preferably at least one block of poly(styrene) in which may be included small amounts of conjugated diene and at least one block of polybutadiene or poly(isoprene) wherein may be included small amounts of styrene, in an amount of from 30 to 60% by weight relative to the weight of the total composition, and preferably from 35 to 55% by weight;

(b) a thermoplastic polymer which is compatible with the block copolymer as defined hereinbefore and which is preferably selected from the group consisting of the poly(vinyl aromatic), poly(alkylene) or poly-(alkylene/vinylester) type in an amount of from 10 to 50% by weight relative to the weight of the total composition, and preferably from 10 to 40% by weight;

(c) a non-aromatic oil and in particular paraffinic and/or naphthenic oil in an amount of from 20-40% by weight relative to the weight of the total composition, and preferably from 20 to 30% by weight, the electron beam irradiation being applied with an energy intensity of from 1.0 to 4.5 MeV and preferably of from 1.2 to 2.0 MeV at doses in the range of from 50 to 400 kGy and preferably from 100 to 200 kGy.

According to a preferred embodiment of the process of the present invention as component (a) linear triblock copolymers are used, consisting of two (pure) polystyrene terminal blocks and a centre block of polybutadiene, having number average molecular weights in the range of from 5.000 to 40.000 and from 10.000 to 1.000.000 respectively, and more preferably from 10.000 to 35.000 and from 30.000 to 350.000, such as Cariflex TR-4113 (a Shell trade mark).

As component (b) is preferably used a thermoplastic polymer selected from the group consisting of polystyrene, optionally mixed with polyphenylene ether (PPE), poly(styrene/acrylonitrile), polyethylene, polypropylene, said polymer optionally being toughened by incorporation of a rubber in a usual amount. According to a most preferred embodiment a toughened polystyrene or polystyrene/PPE blends is used.

As component (c) naphthenic or paraffinic oil is preferably used, Shellflex 4510 in the most preferred embodiment preferably Shellflex 4510 naphthenic oil (a Shell trade mark) is used in an amount of from 20 to 30% by weight. It will be appreciated that the found improvement of abrasion resistance and Rossflex performance and without a significant deterioration of other properties of the final product obtained by using specific weight ratios of the respective ingredients of the starting composition and using a specific dose of irradiation, higher than those according to the before mentioned prior art publications only could be regarded as highly surprising by a person skilled in the art based on the hereinbefore mentioned prior art.

It will be appreciated that another aspect of the present invention is formed by shaped articles, consisting of the irradiated polymer composition as described hereinbefore, such as footwear elements and more in particular soles for indoor sport shoes.

The invention is further illustrated by the following examples, however, without restricting its scope to these preferred specific embodiments.

Examples

As starting thermoplastic rubber ingredients were used Cariflex TR-1101 (styrene content 31%; Hardness 72 Shore A and MFR 200 °C/5 kg lower than 1 g/10 min) and Cariflex TR-4113, containing 45 phr paraffinic oil, 35% styrene in clear polymer, hardness 49 Shore and MFR 200 °C/5 kg of typically 22 g/10 min, having similar molecular weights and having a linear structure (SBS).

The rubbers were compounded with different amounts of toughened polystyrene (TPS), having a MFR 200 °C/5 kg of typically 5 g/10 min and about 100 nips per gram, and/or naphthenic oil (Shellflex 4510).

The SBS content ranged in the prepared compounds from 25 to 100% by weight. For certain rubber concentrations typical for footwear formulations, different proportions of TPS and oil were also used.

As stabilizers were used hindered phenol and benzotriazole. Every formulation included 0.1 phr of Irganox 565 (trade mark) and 0.3 phr of Tinuvin P (trade mark).

The properties of the compositions, before and after different doses of irradiation, were measured and compared as listed in the hereafter following tables.

Most of the compositions were mixed in a Pomini Farrel PL 4.3 (trade mark) internal mixer, having an effective chamber volume of 2.9 l for 2.8 kg composition, a rotor speed of 80-100 rpm, a temperature setting of kneaders 80 °C and barrel 90 °C, a ram pressure of 6 bar, and a mixing time of 10-15 min, then sheeted off on the Schwabentan Polymix 300 L mill (trade mark), having rolls of 300 mm dia * 700 mm width, a friction ratio of 1.4 and a temperature setting of 85 °C front - 75 °C rear, cooled in air and then granulated with a Sagitta GR Nod 250/SL dicer (trade mark). The composition identified by EB7 was prepared by extending TR-1101 with oil in a Papenmeier TEH K20 (trade mark) dryblender, having a chamber volume of 20 l, a capacity of 5 l and at a temperature of 75-80 °C. The compositions were then conditioned for 24 hours prior to moulding test plates.

The test plates, being 150 mm long, 150 mm wide and 2 mm thick were injection moulded on a high pressure Demag D 150-452 (trade mark) reciprocating screw machine. Two other sets of test plates, being 250 mm long, 110 mm wide and 9 mm or 3 mm thick, were injection moulded on the low pressure transfer injection moulding machine Lorenzen Sint 55 TR (trade mark) whereas the compositions identified by EB6 and EB7, due to their very low Melt Flow Rate, were compression moulded with a Schwabentan Polystat 2005 (trade mark) press into test plates being 150 mm long, 150 mm wide and 6.3 mm thick.

The compositions were irradiated with electron beams having an energy of 1.5 MeV, which penetrated to about 6 mm. Different doses of 50, 100, 200 and 400 kGy were applied.

Testing consisted of the determination of the following properties, before and after irradiation:

- Melt Flow Rates (MFR) at 190 °C/2.16 kg and 190 °C/5.00 kg of the granulated compounds and of the irradiated 9 mm thick plates;
- hardness (Shore A), density, DIN abrasion (at 23° as well as 40, 60 and 80 °C) at 0° from the flow, Dunlop tripsometer resilience and yellowness index of the 9 or 6.3 mm thick test plates;
- crack growth resistance (modified Rossflex) of the 3 mm thick test plates;
- stresses at 100%, 300% and 500% strain, tensile strength, elongation at break, trouser and angle tear strength of 2 mm thick test plates. These properties were determined both in the moulding direction (MD) and perpendicular to the moulding direction (PMD).

The test procedures are listed in the following table.

Table I

| Test Methods | | |
|---|---|---|
| Property | Test procedure | Details |
| Melt flow rate | ISO 1133 | 190 °C - 2.16 and 5 kg load values after 0 and 30 s abrasion measured at 0° from the flow lines |
| Hardness | ASTM D 2240 | |
| Abrasion | DIN 53516 | |
| Crack growth | ASTM D 1052 | 3 mm thick sample |
| Yellowness | ASTM D 1295 | 45° reflectance 2° observer |
| Tensile properties | ISO 37 | dumbbell type "I" |
| Angle tear strength | ISO 34 | |
| Trouser tear strength | ISO 34 | |
| Resilience | BS 983 A8/A | Dunlop tripsometer |

Table II: Formulation of EB Irradiated Compounds

Table IIa

| Compound Reference | | a | b | c | d | e |
|---|---|---|---|---|---|---|
| Formulation | | | | | | |
| TR-1101 | | 100 | 100 | - | - | - |
| TR-4113 | | - | - | 100 | 100 | 100 |
| TPS 476L | phr | - | - | - | 12 | 25 |
| Shellflex 4510 | phr | - | 18 | - | 13 | - |
| Composition w/w | | | | | | |
| SBS | % | 100 | 85 | 69 | 55 | 55 |
| TPS | % | - | - | - | 10 | 20 |
| Oil | % | - | 15 | 31 | 35 | 25 |

Table IIb

| Compound Reference | | f | g | h | i | j |
|---|---|---|---|---|---|---|
| Formulation | | | | | | |
| TR-1101 | | - | - | - | - | - |
| TR-4113 | | 100 | 100 | 100 | 100 | 100 |
| TPS 476L | phr | 35 | 45 | 67 | 77 | 126 |
| Shellflex 4510 | phr | 18 | 8 | 30 | 20 | 50 |
| Composition w/w | | | | | | |
| SBS | % | 45 | 45 | 35 | 35 | 25 |
| TPS | % | 23 | 29 | 34 | 39 | 46 |
| Oil | % | 32 | 26 | 31 | 26 | 29 |

Table III: Properties of EB Compounds Before and After Irradiation

Table IIIa

| Compound a | density = 0.94 g/cm$^3$ | | | | | |
|---|---|---|---|---|---|---|
| Dose | kGy | 0 | 50 | 100 | 200 | 400 |
| MFR 190/2.16 | g/10 min | <0.5 | <0.5 | <0.5 | <0.5 | <0.5 |
| 190/5.00 | g/10 min | <0.5 | <0.5 | <0.5 | <0.5 | <0.5 |
| Hardness, 0 s Shore A units | | 82 | 82 | 83 | 84 | 88 |
| 30 s Shore A units | | 79 | 79 | 81 | 82 | 86 |
| DIN abrasion, 0° angle mm$^3$ | | 75 | 95 | 100 | 125 | 290 |
| Resilience | % | 55 | 57 | 57 | 57 | 57 |
| Colour Yellowness index | | 23 | 82 | 97 | 94 | 36 |

7

Table IIIb

| Compound b | density = $0.93$ g/cm$^3$ | | | | | |
|---|---|---|---|---|---|---|
| Dose | kGy | 0 | 50 | 100 | 200 | 400 |
| MFR 190/2.16 | g/10 min | <0.5 | <0.5 | <0.5 | <0.5 | <0.5 |
| 190/5.00 | g/10 min | <0.5 | <0.5 | <0.5 | <0.5 | <0.5 |
| Hardness, 0 s Shore A units | | 70 | 71 | 73 | 74 | 75 |
| 30 s Shore A units | | 66 | 69 | 71 | 73 | 74 |
| DIN abrasion, 0° angle | mm$^3$ | 95 | 115 | 130 | 180 | 290 |
| Resilience | % | 58 | 62 | 62 | 63 | 65 |
| Colour Yellowness index | | 29 | 67 | 82 | 72 | 62 |

Table IIIc

| Compound c | density = $0.93$ g/cm$^3$ | | | | | |
|---|---|---|---|---|---|---|
| Dose | kGy | 0 | 50 | 100 | 200 | 400 |
| MFR 190/2.16 | g/10 min | 5.4 | <0.5 | <0.5 | <0.5 | <0.5 |
| 190/5.00 | g/10 min | 18 | <0.5 | <0.5 | <0.5 | <0.5 |
| Hardness, 0 s Shore A units | | 50 | 52 | 52 | 56 | 59 |
| 30 s Shore A units | | 48 | 50 | 50 | 54 | 57 |
| DIN abrasion, 0° angle | mm$^3$ | 160 | 160 | 180 | 215 | 260 |
| Resilience | % | 69 | 72 | 74 | 76 | 78 |
| Colour Yellowness index | | 50 | 47 | 50 | 50 | 53 |

8

Table IIId

| Compound d | density = 0.93 g/cm$^3$ | | | | | | |
|---|---|---|---|---|---|---|---|
| Dose | | kGy | 0 | 50 | 100 | 200 | 400 |
| MFR 190/2.16 | g/10 min | | 13 | 1.3 | <0.5 | <0.5 | <0.5 |
| 190/5.00 | g/10 min | | 51 | 1.7 | <0.5 | <0.5 | <0.5 |
| Hardness, 0 s Shore A units | | | 43 | 45 | 46 | 48 | 52 |
| 30 s Shore A units | | | 40 | 42 | 44 | 46 | 51 |
| DIN abrasion, 0° angle | mm$^3$ | | 405 | 360 | 305 | 235 | 265 |
| Resilience | % | | 65 | 67 | 69 | 72 | 76 |
| Colour | Yellowness index | | -4 | 12 | 20 | 14 | 10 |
| Modulus 100%, MD/PMD | MPa | | 1.6/0.7 | 1.7/0.7 | 1.9/0.8 | 2.1/0.9 | 2.6/1.2 |
| Modulus 300%, MD/PMD | MPa | | 2.6/1.3 | 3.0/1.6 | 3.4/2.0 | 4.0/2.6 | ---/4.3 |
| Modulus 500%, MD/PMD | MPa | | 4.1/2.6 | 4.5/3.3 | 4.9/4.2 | 5.3/5.1 | ---/--- |
| Tensile strength, MD/PMD MPa | | | 6.5/9.0 | 7.0/8.0 | 8.5/9.0 | 6.5/8.5 | 4.5/5.5 |
| Elongation at break, MD/PMD % | | | 840/880 | 915/885 | 915/895 | 650/775 | 270/395 |
| Trouser tear, MD/PMD | kN/m | | 12/7 | 13/9 | 10/9 | 6/9 | 2/4 |
| Angle tear, MD/PMD | kN/m | | 29/22 | 33/25 | 32/27 | 22/20 | 12/12 |
| Crack growth, 2-4 mm | kc | | 500 * | 1150 * | 2600 * | 3300 * | 30 |
| 2-6 mm | kc | | 800 * | 1350 * | 3450 * | 4600 * | 60 |

MD = Moulding Direction - PMD = Perpendicular to Moulding Direction
     * failure due to self-initiated cracks

EP 0 518 444 A1

Table IIIe

| Compound e | density = $0.95 \text{ g/cm}^3$ | | | | | |
|---|---|---|---|---|---|---|
| Dose | kGy | 0 | 50 | 100 | 200 | 400 |
| MFR 190/2.16 | g/10 min | 2.7 | <0.5 | <0.5 | <0.5 | <0.5 |
| 190/5.00 | g/10 min | 13 | <0.5 | <0.5 | <0.5 | <0.5 |
| Hardness, 0 s Shore A units | | 60 | 61 | 62 | 64 | 67 |
| 30 s Shore A units | | 57 | 58 | 60 | 62 | 66 |
| DIN abrasion, 0° angle | $mm^3$ | 135 | 135 | 135 | 140 | 160 |
| Resilience | % | 65 | 65 | 67 | 69 | 71 |
| Colour    Yellowness index | | -4 | 19 | 32 | 29 | 19 |
| Modulus 100%, MD/PMD | MPa | 3.3/1.4 | 3.6/1.6 | 3.8/1.8 | 4.5/2.0 | 5.1/2.6 |
| Modulus 300%, MD/PMD | MPa | 5.4/2.9 | 5.9/3.6 | 6.2/4.4 | 6.9/5.3 | 7.5/6.8 |
| Modulus 500%, MD/PMD | MPa | 6.7/5.4 | 7.3/6.3 | 7.5/7.1 | 8.0/7.8 | ---/--- |
| Tensile strength, MD/PMD | MPa | 6.5/9.0 | 7.5/9.5 | 8.5/11 | 8.5/11 | 7.5/8.5 |
| Elongation at break,MD/PMD | % | 585/750 | 580/730 | 650/770 | 535/700 | 325/465 |
| Trouser tear, MD/PMD | kN/m | 21/15 | 22/16 | 16/20 | 12/14 | 4/16 |
| Angle tear, MD/PMD | kN/m | 43/35 | 44/36 | 44/37 | 38/31 | 28/26 |
| Crack growth, 2-4 mm | kc | 150 | 230 | 600 | 1100 | <15 |
| 2-6 mm | kc | 220 | 340 | 920 | 1600 | <15 |

MD = Moulding Direction - PMD = Perpendicular to Moulding Direction

10

Table IIIf

| Compound f | | density = 0.95 g/cm$^3$ | | | | |
|---|---|---|---|---|---|---|
| Dose | kGy | 0 | 50 | 100 | 200 | 400 |
| MFR 190/2.16 | g/10 min | 12 | 0.5 | <0.5 | <0.5 | <0.5 |
| 190/5.00 | g/10 min | 57 | 2.8 | <0.5 | <0.5 | <0.5 |
| Hardness,  0 s Shore A units | | 47 | 49 | 51 | 54 | 58 |
| 30 s Shore A units | | 45 | 47 | 49 | 52 | 56 |
| DIN abrasion, 0° angle | mm$^3$ | 360 | 250 | 200 | 180 | 175 |
| DIN abrasion, 23 °C | mm$^3$ | 240 | 190 | 195 | 170 | 175 |
| 40 °C | mm$^3$ | 320 | 250 | 230 | 215 | 235 |
| 60 °C | mm$^3$ | 435 | 310 | 290 | 270 | 355 |
| 80 °C | mm$^3$ | 600 | 515 | 395 | 370 | 525 |
| Resilience | % | 65 | 65 | 69 | 72 | 76 |
| Colour  Yellowness index | | -1 | 21 | 32 | 28 | 20 |
| Modulus 100%, MD/PMD | MPa | 2.7/1.0 | 3.0/1.2 | 3.3/1.3 | 3.7/1.6 | 4.3/2.1 |
| Modulus 300%, MD/PMD | MPa | 4.7/2.6 | 5.2/3.3 | 5.6/3.8 | 6.2/4.7 | 6.7/6.1 |
| Modulus 500%, MD/PMD | MPa | ---/4.7 | ---/5.5 | 6.6/6.1 | 7.1/6.7 | ---/--- |
| Tensile strength, MD/PMD | MPa | 5.5/5.5 | 6.0/6.0 | 6.5/7.0 | 7.0/8.0 | 7.0/7.5 |
| Elongation at break, MD/PMD | % | 450/660 | 480/630 | 545/640 | 540/645 | 330/470 |
| Trouser tear, MD/PMD | kN/m | 11/9 | 12/10 | 11/11 | 9/11 | 4/15 |
| Angle tear, MD/PMD | kN/m | 29/24 | 32/26 | 34/28 | 30/26 | 20/20 |
| Crack growth, 2-4 mm | kc | 90 | 120 | 390 | 900 | 50 |
| 2-6 mm | kc | 140 | 190 | 550 | 1170 | 100 |

MD = Moulding Direction - PMD = Perpendicular to Moulding Direction

Table IIIg

| Compound g | | density = 0.96 g/cm$^3$ | | | | | |
|---|---|---|---|---|---|---|---|
| Dose | | kGy | 0 | 50 | 100 | 200 | 400 |
| MFR 190/2.16 | | g/10 min | 3.4 | <0.5 | <0.5 | <0.5 | <0.5 |
| 190/5.00 | | g/10 min | 21 | 0.6 | <0.5 | <0.5 | <0.5 |
| Hardness, 0 s Shore A | | units | 63 | 65 | 66 | 68 | 71 |
| 30 s Shore A | | units | 60 | 62 | 63 | 66 | 69 |
| DIN abrasion, 0° angle | | mm$^3$ | 150 | 140 | 135 | 135 | 140 |
| DIN abrasion, 23 °C | | mm$^3$ | 165 | 150 | 150 | 150 | 170 |
| 40 °C | | mm$^3$ | 195 | 180 | 180 | 185 | 220 |
| 60 °C | | mm$^3$ | 335 | 250 | 215 | 210 | 325 |
| 80 °C | | mm$^3$ | 530 | 415 | 355 | 330 | 500 |
| Resilience | | % | 62 | 63 | 65 | 67 | 71 |
| Colour Yellowness index | | | 2 | 23 | 38 | 35 | 28 |
| Modulus 100%, MD/PMD | | MPa | 4.2/1.9 | 4.6/2.2 | 5.0/2.5 | 5.6/2.9 | 6.4/3.9 |
| Modulus 300%, MD/PMD | | MPa | 6.5/4.4 | 7.0/5.1 | 7.5/5.9 | 8.1/6.7 | ---/8.0 |
| Modulus 500%, MD/PMD | | MPa | ---/6.9 | ---/7.4 | ---/8.2 | ---/8.8 | ---/--- |
| Tensile strength, MD/PMD | | MPa | 6.5/7.5 | 7.0/8.0 | 8.0/9.0 | 8.5/10 | 8.5/10 |
| Elongation at break,MD/PMD | | % | 375/610 | 370/710 | 405/630 | 390/615 | 270/470 |
| Trouser tear, MD/PMD | | kN/m | 22/17 | 22/17 | 15/17 | 11/16 | 8/17 |
| Angle tear, MD/PMD | | kN/m | 42/35 | 43/36 | 43/37 | 40/36 | 28/30 |
| Crack growth, 2-4 mm | | kc | 50 | 70 | 230 | 770 | 35 |
| 2-6 mm | | kc | 80 | 130 | 390 | 1070 | 70 |

MD = Moulding Direction - PMD = Perpendicular to Moulding Direction

Table IIIh

| Compound h | | density = 0.96 g/cm$^3$ | | | | | |
|---|---|---|---|---|---|---|---|
| Dose | | kGy | 0 | 50 | 100 | 200 | 400 |
| MFR 190/2.16 | g/10 min | | 15 | 1.8 | <0.5 | <0.5 | <0.5 |
| 190/5.00 | g/10 min | | 71 | 7.5 | <0.5 | <0.5 | <0.5 |
| Hardness, 0 s Shore A units | | | 54 | 56 | 58 | 61 | 64 |
| 30 s Shore A units | | | 51 | 53 | 55 | 58 | 62 |
| DIN abrasion, 0° angle | mm$^3$ | | 220 | 205 | 185 | 170 | 165 |
| Resilience | % | | 62 | 62 | 65 | 69 | 71 |
| Colour | Yellowness index | | 4 | 24 | 36 | 34 | 28 |

Table IIIi

| Compound i | | density = 0.96 g/cm$^3$ | | | | | |
|---|---|---|---|---|---|---|---|
| Dose | | kGy | 0 | 50 | 100 | 200 | 400 |
| MFR 190/2.16 | g/10 min | | 5.5 | 0.9 | <0.5 | <0.5 | <0.5 |
| 190/5.00 | g/10 min | | 40 | 2.6 | <0.5 | <0.5 | <0.5 |
| Hardness, 0 s Shore A units | | | 67 | 69 | 71 | 72 | 75 |
| 30 s Shore A units | | | 64 | 67 | 68 | 70 | 73 |
| DIN abrasion, 0° angle | mm$^3$ | | 170 | 165 | 160 | 145 | 155 |
| Resilience | % | | 52 | 58 | 60 | 62 | 65 |
| Colour | Yellowness index | | 4 | 28 | 39 | 37 | 30 |

Table IIIj

| Compound j | | | density = 0.97 g/cm$^3$ | | | | |
|---|---|---|---|---|---|---|---|
| Dose | | kGy | 0 | 50 | 100 | 200 | 400 |
| MFR 190/2.16 | g/10 min | | 19 | 3.2 | <0.5 | <0.5 | <0.5 |
| 190/5.00 | g/10 min | | 93 | 12 | 1.7 | <0.5 | <0.5 |
| Hardness, 0 s Shore A units | | | 68 | 71 | 72 | 73 | 76 |
| 30 s Shore A units | | | 65 | 68 | 69 | 71 | 74 |
| DIN abrasion, 0° angle | mm$^3$ | | 265 | 255 | 230 | 220 | 220 |
| Resilience | % | | 52 | 52 | 55 | 57 | 58 |
| Colour Yellowness index | | | 5 | 25 | 36 | 36 | 31 |

**Claims**

1. Process for the manufacture of electron beam irradiated polymeric footwear compositions, characterized by electron beam irradiation of a composition comprising:

(a) a linear block copolymer, containing at least one block of predominantly poly(vinylaromatic compound) and at least one block of predominantly poly(conjugated diene) in an amount of from 30 to 60% by weight relative to the weight of the total composition;

(b) a thermoplastic polymer, which is compatible with the block copolymer as defined hereinbefore in an amount of from 10 to 50% by weight relative to the weight of the total composition;

(c) a non-aromatic oil in an amount of from 20 to 40% by weight relative to the weight of the total composition, the electron beam irradiation being applied with an energy intensity of from 1.0 to 4.5 MeV at doses in the range of from 50 to 400 kGy.

2. Process according to claim 1, characterized in that a block copolymer is used consisting of at least one block of poly(styrene) wherein may be included small amounts of conjugated diene, and at least one block of polybutadiene or poly(isoprene) wherein may be included small amounts of styrene.

3. Process according to claim 1, characterized in that the amount of block copolymer is in the range from 35 to 55% by weight.

4. Process according to claim 1, characterized in that the amount of thermoplastic polymer is in the range from 10 to 40% by weight.

5. Process according to claim 1, characterized in that the non-aromatic oil is consisting of a paraffinic and/or naphthenic oil in an amount of from 20 to 30% by weight.

6. Process according to claim 2, characterized in that component

(a) is a linear triblock copolymer, consisting of two polystyrene terminal blocks and a centre block of polybutadiene, having number average molecular weights in the range of from 5,000 to 40,000 and from 10,000 to 1.000,000 respectively.

7. Process according to claim 6, characterized in that the polystyrene blocks have number average molecular weight of from 10,000 to 35,000 and the polybutadiene block has a number average molecular weight of from 30,000 to 350,000.

8. Process according to claim 7, characterized in that Cariflex TR-4113 is included.

9. Process according to claim 4, characterized in that a thermoplastic (co)polymer is included, selected from the group consisting of poly(vinyl aromatic), poly alkylene and poly(alkylene/vinyl ester) type compounds.

10. Process according to claim 9, characterized in that the thermoplastic (co)polymer is selected from the group consisting of polystyrene, optionally mixed with polyphenylene ether, poly(styrene/acrylonitrile), polyethylene and polypropylene, said polymer optionally being toughened by incorporation of a rubber in a usual amount.

11. Process according to claim 10, characterized in that toughened polystyrene or a polystyrene/PPE blend is used.

12. Process according to claim 5, characterized in that as component (c) a naphthenic oil is included.

13. Process according to claim 12, characterized in that as component (c) Shellflex 4510 naphthenic oil is included in an amount of from 20 to 30% by weight.

14. Process according to any one of the claims 1-13, characterized in that the electron beam irradiation is applied with an energy intensity of from 1.2 to 2.0 MeV.

15. Process according to any one of the claims 1-13, characterized in that the electron beam irradiation is applied in doses in the range of from 100 to 200 kGy.

16. Shaped articles in the form of footwear elements and in particular soles for indoor sport shoes consisting of the irradiated polymer compositions, obtained according to claims 1-15.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | EP-A-0 146 172 (STAMICARBON B.V., LICENSING SUBSIDIARY OF DSM) * claims * | 1 | C08L53/02 C08G81/02 B29C59/10 |
| A | US-A-4 229 338 (HANSEN ET AL) * claims * | 1 | |
| A | US-A-4 409 357 (MILKOVICH) * the whole document * | 1 | |
| A,D | US-A-4 152 231 (ST. CLAIR ET AL) * the whole document * | 1 | |
| A,D | DATABASE WPIL, NØ 81-30045D, DERWENT PUBLICATIONS LTD, LONDON, GB; & JP-A-56,024,145 (KAGAKUHIN KENSA KYO) 7 MARCH 81 * ABSTRACT * | 1 | |

TECHNICAL FIELDS SEARCHED (Int. Cl.5 )

C08L
C08G
B29C

The present search report has been drawn up for all claims

| Place of search | Date of completion of the search | Examiner |
|---|---|---|
| THE HAGUE | 12 AUGUST 1992 | IRAEGUI RETOLAZA E. |